Europäisches Patentamt

**European Patent Office**

**Office européen des brevets**

(11) Publication number: **0 413 105 A2**

# EUROPEAN PATENT APPLICATION

(21) Application number: **90111441.3**

(22) Date of filing: **18.06.90**

(51) Int. Cl.5: **C08L 23/04**, //(C08L23/04, C08K5:00)

The title of the invention has been amended (Guidelines for Examination in the EPO, A-III, 7.3).

(30) Priority: **19.06.89 JP 154701/89**

(43) Date of publication of application: **20.02.91 Bulletin 91/08**

(84) Designated Contracting States: **AT BE CH DE DK ES FR GB GR IT LI LU NL SE**

(71) Applicant: **NIPPON UNICAR COMPANY LIMITED**
**Asahi-Tokai Building 6-1 Ohtemachi 2-Chome**
**Chiyoda-ku Tokyo 100(JP)**

(72) Inventor: **Senume, Akataka**
**21-3, Saitobuncho**
**Kanagawa-ku, Yokohama-shi,**
**Kanagawa-ken(JP)**
Inventor: **Tsukada, Kiroku**
**1-17-2-406, Saido, Kohnan-Ku**
**Yokohama-shi, Kanagawa-ken(JP)**
Inventor: **Noda, Isoa**
**2-9-11, Sakuragoaka**
**Yokosuka-shi, Kanagawa-ken(JP)**

(74) Representative: **von Hellfeld, Axel, Dipl.-Phys. Dr. et al**
**Wuesthoff & Wuesthoff Patent- und Rechtsanwälte Schweigerstrasse 2**
**D-8000 München 90(DE)**

(54) Oxidation preventing resin composition and a packaging container of the same.

(57) A deoxidating resin composition comprising:
100 weight parts of a reaction product obtained by heat-reacting a composition comprising
100 weight parts of ethylene polymer,
1 - 400 weight parts of organopolysiloxane having a viscosity higher than 1,000 CS at 23 °C and expressed by Formula (A)

$$R^1_a R^2_b SiO_{\frac{4-a-b}{2}} \qquad (A)$$

(where $R^1$ is an unsaturated aliphatic group, $R^2$ is an unsubstituted or a substituted monovalent hydrocarbon group containing no unsaturated aliphatic group, $0 < a < 1$, $0.5 < b < 3$, and $1 < a + b < 3$),
0.01 - 30 weight parts of a hydrocarbon compound expressed by Formula (B)
$CH_2 = CH(CH_2)_c CH = CH_2$ (B)
where c is an integer of 1 - 30, and
0.005 - 0.05 wight parts of an organic peroxide; and
0.5 - 150 weight parts of an iron deoxidating agent mixed with the reaction product.

# A DEOXIDATING RESIN COMPOSITION AND A PACKAGING CONTAINER OF THE SAME

## BACKGROUND OF THE INVENTION

### Field of Industrial Uses

This invention relates to a deoxidating resin composition, and packaging containers made of the composition. Specifically, this invention relates to a deoxidating resin composition for packaging containers and packaging containers made of the composition which prevent foods, mechanical parts, etc. packaged therein from deteriorating or rusting due to oxidation.

### Prior Art

For the purposes of improving the preservation of food, inhibiting mechanical parts from rusting, etc. have been conventionally used the so-called deoxidating agents comprising as main components various reducing substances, such as dithionite, sulfite, hydrogensulfite, tiosulfate, oxalate, pyrogallol, Rongalite, glucose, copperamine complex, iron powder, iron oxide powder, zinc dust, etc. In practical uses, small amounts of these deoxidating agents are packaged in cloth or unwoven fabric and placed in packaging containers holding foods, mechanical parts, etc. together therewith. The agents in the containers absorb the oxygen to lower the oxygen concentration within the packaging containers, which results in advantageous effects that the foods are better preserved, the mechnaical parts are prevented from rusting, etc. Since these advantageous effects were appreciated, their comsuptions have increased. But, one the other hand, there have occurred some problems with their packaging technique and safety.

That is, conventionally, the deoxidating agents are packaged in pouches of breathable materials, such as woven fabric, woven fabric or others, and the pouches are simply placed in closed packaging containers or adhered to packaging materials at positions. Such ways of uses not only make the packaging process bothering, but also has possible dangers that children will eat the deoxidating agnets, and the deoxidating agents will come into directly contact the foods, the mechanical parts, etc. in the packaging containers.

## OBJECTIVES

### Problems to be Solved by the Invention

In view of these possbile dangers, this invention aims at providing a packaging container which allows the deoxidating agents to be used in a simple and safe way which is free from these possible dangers that the foods, mechanical parts or others in the packaging container will come into direct contact with the oxidating agents to resultantly impair the safety and sanitariness of the foods, the mechanical parts are rusted, or accidentally children eat the deoxidating agents.

## SUMMARY

In this invention, a deoxidating agent is distributed in a resin film having good oxygen permeability. Accorddingly, the deoxidating agent does not contact directly to contents, e.g., foods, mechanical parts, electronic parts, furs, chemicals, consequently without affecting the contents. It does not happen that children accidentally eat deoxidating agents. It is not necessary to place deoxidating agent containing pouches into packaging containers, with a consequent result that the packaging operationis simplified.

The packaging container according to this invention protects the contents thereof from various undesirable effects caused by oxygen. This packaging container can be used in packaging foods, mechanical parts, chemicals, medicines, ets.

## DETAILED DESCRIPTION

The inventors filed a patent application in Japanese Patent Application No. 305185/1988 on a composition comprising an ethylene polymer, a vinyl group-content silicone compound, diene-content hydrocarbon compound, and an organic peroxide. They have found that the film of the reaction product generated by heat-kneading this composition has high oxygen permeability. Based on the conception that the combination of this material and a deoxidating agent improve the problems of the prior art and provides good deoxidating function, they have completed this invention. That is, this invention relates to a deoxidating resin composition comprising 100 weight parts of a reaction product obtained by heat-reacting a composition comprising

100 weight parts of ethylene polymer,

1 - 400 weight parts of organopolysiloxane having a viscosity higher than 1,000 CS at 23 °C and expressed by Formula (A)

$$R^1_a R^2_b SiO_{\frac{4-a-b}{2}} \qquad (A)$$

(where $R^1$ is an unsaturated aliphatic group, $R^2$ is an unsubstituted or a substituted monovalent hydrocarbon group containing no unsaturated aliphatic group, $0<a<1$, $0.5<b<3$, and $1<a+b<3$),

0.01 - 30 weight parts of a hydrocarbon compound expressed by Formula (B)

$CH_2 = CH(CH_2)_c CH = CH_2$ (B)

where c is an integer of 1 - 30), and

0.005 - 0.05 wight parts of an organic peroxide; and

0.5 - 150 weight parts of an iron deoxidating agent mixed with the reaction product,

2. a packaging container comprising an inner layer of the deoxidating resin composition according to claim 1, and an oxygen impermeable layer, and

3. a deoxidating resin composition according to claim 1, wherein the iron deoxidating agent is provided by ferrous iron.

The ethylene polymer used in the composition according to this invention contains ethylene as the main component and is exemplified by high-pressure process polyethylene, linear low-density polyethylene (LLDPE), ethylene-α-olefin copolymer, ethylene-vinyl acetate copolymer, ethylene-acrylic acid copolymer, ethylene-methacrylic acid copolymer, ethylene-methyl acrylate copolymer, ethylene-methyl methacrylate copolymer, ethylene-ethyl acrylate copolymer, ethylene-ethyl methacrylate, ethylene-vinyl alcohol copolymer, ethylene-propylene-diene terpolymer, etc. which have crystal melting points above 40 °C.

In Formula (A) expressing the organosilicone compound used in this invention, R represents one, or two or more than two groups of methyl group, ethyl group. n-propyl group, i-propyl group and other alkyl groups, or vinyl group, and at least more than 1 of R is vinyl group.

The organosilicone compound used in this invention may be those marketed as, e.g., modifiers for the tear strength of silicone rubber.

The viscosity of the organosilicone compound expressed by Formula (A) used in this invention at 23 °C is equal to or higher than 1,000 CS, preferably 10,000 - 1,000,000 CS. When the viscosity is lower than 1,000 CS, the composition is difficult to be heat-kneaded, and often the organosilicone compound exudes from surfaces of the resultant moldings. The hydrocarbon compound expressed by Formula (B) used in this invention is exemplified by 1,4-p entadiene, 1,5 hexadiene, 1,6-heptadiene, 1,7-octadiene, 1, 8-nonadiene, 1,9-decadiene, 1,10-undecadiene, 1,11-dodecad iene, 1,12-tridecadiene, 1,13-tetradecadiene, or others.

The organic peroxide used in this invention has a decomposition temperature of 100 - 220 °C in a half life of 10 minutes and is exemplified by the following. Their decomposition temperatures (°C) are shown in parentheses.

Succinic acid peroxide (110), benzoyl peroxide (110), t-butyl peroxy-2-ethyl hexanoate (113), p-chlorobenzoyl peroxide (115), t-butyl peroxy isobutylate (115), t-butyl peroxyisopropyl carbonate (135), t-butyl perooxylaurate (140), 2,5-dimethyl-2,5-di(benzoylperoxy)hexane (140), t-butyl peroxyacetate (140), di-t-butyl diperoxyphthalate (140), t-butyl peroxymaleic acid (140), cyclohexanon peroxide (145), t-butyl peroxybenzoate (145), dicumyl peroxide (150), 2,5-dimethyl-2,5-di(t-butyl peroxy)hexane (155), t-butyl cumylperoxide (155), t-butyl hydroperoxide (158),di-t-butyl peroxide (160), 2,5-dimethyl-2,5-di(t-butyl peroxy)hexine-3 (170), di-isopropyl benzene hydroperoxide (170), p-menthane hydroperoxide (180), 2,5-dimethyl hexane-2,5-dihydroperoxide (213)

The organosilicone compound expressed by Formula (A) used in this invention is added by 1 part or more, preferably 2 - 400 parts to 100 weight parts of the ethylene polymer. When the compound is added by less than 1 part exclusive of 1 part, the characteristics of silicone are not exhibited easily. When the compound is added by more than 400 parts, the strength of the reaction product lowers.

Thed hydrocarbon compound expressed by Formula (B) used in this invention is added by 0.01 or more parts, preferably 0.05 - 30 parts. When the compound is added by less than 0.01 parts exclusive of 0.01 parts, the resultant molding often has masses of crosslinked silicone, and the reaction product lacks homogeneity.

The organic peroxide used in this invention is added by 0.005 - 0.05 parts to 100 weight parts of the ethylene polymer. When the organic peroxide is added by less than 0.005, the reation time often becomes longer. When the compound is added by more than 0.05 parts, the moldability is often impaired.

In this invention, heat-kneading by kneaders, extruders, or others is suitable to react the composition. The reaction temperature for the heat-kneading is generally 100 - 220 °C, and the time may be about 10 minutes.

According to this invention, iron deoxidating agents comprise iron powders or iron compounds. Iron powders are provided by reducing iron powder, electrolytic iron powder, atomized iron powder, ground iron powder, etc.

The iron compound is provided by iron carbide, iron carbonyl, ferrous oxide, ferrou peroxide, silicon iron, etc. These deoxidating agents can be used as they are, but when they are coated with a small amount of a metal halide, their oxygen absorbing speeds are increased.

Preferably the iron deoxidating agent used in this invention is powder.

The iron deoxidating agent used in this invention is added preferably by 0.5 - 150 parts to 100 parts of the reaction product in view of the moldability and efficiency.

Heat-kneading by means of kneaders, extruders, or others is suitble to prepare a composition of the reaction product and the iron deoxidating agent.

The oxygen impermeable layer used in this invention is provided by films of PBDC coat cellophane, nylon, polyester, etylene-vinylalcohol copolymer. high-density polyethylene, polyacrylonitrile, etc., biaxially oriented polypropylene film, polyvinylidenechloride coating polypropylene film and aluminium foil, and their laminated films. In this invention, the film layer of the deoxidating resin composition is inside opposed to the contents of the container, such as foods, mechanical parts, etc.

In this invention, the oxygen impermeable layer is laminated integral with the deoxidating resin composition on the side opposed to the atmosphere. In the case that contents is affected by the intrusion of or contact with even a trace of the deoxidating agent, it is possible to provide an additional resin film of high oxygen permeability on the inside of the inner layer.

The laminated material used in the packaging container according to this invention is formed by the dry laminating, extrusion laminating, coextrusion laminating, etc.

The packaging container according to this invention may be in arbitrary shapes, e.g., bags, cylinders, etc. After the packaging container is filled with foods, mechanical parts, or others, the packaging container is air-tight sealed seclude the contents from air. The air-tight sealing is effected by heat-selaing, thread-engaging a lid, adhering adhesive tapes, etc.


EXAMPLES


Example 1

One hundred (100) weight parts of ethylene-vinyl acetate copolymer (made by Nippon Unicar) having a melt index of 15 g/10 mins. (190 °C, 2160 g) and 18 wt% of vinyl acetate content, 100 weight parts of silicone gum stock (made by Nippon Unicar) having a viscosity of 300,000 CS at 23 °C and a 1.0 % of methyl vinylsilicone, 1 part of 1,13-tetradecadiene, 0.05 parts of dicumyl peroxide, 0.05 parts of IRGANOX 1010 (an antioxidant made by Ciba Gaigy) were kneaded at 100 °C for 10 minutes and at 170 °C for 20 minutes. Then 50 parts of ferrous iron oxide of a 100-mesh average particle size and the kneaded result were kneaded for 5 minutes. The result was pressed into a sheet having a thickness of 100μ. Then the sheet was thermally laminated at 150 °C to the polyethylene layer of a two-layer film of an aluminium/polyethylene to form a three-layer film. This three-layer film was formed into bags with the ferrous iron oxide contained in the inside bag.

The thus prepared bags were filled with pieces of rice cakes and heat-sealed, and were left at the room temperature for 3 months. No changes, such as molding, etc., was observed on the rice cakes.

Control 1

The same two-layer film of aluminium/polyethylene as in Example 1 was formed into bags. The bags were filled with pieces of rice cakes and heat-sealed. Then the heat-sealed bags were left at the room temperature for 3 months. Then when the bags were opened, mold was found on the cakes.

Example 2

One hyndred (100) weight parts of ethylene-ethyl acrylate copolymer (made by Nippon Unicar) having a melt index (190 °C, 2160 g) and an ethyl acrylate content of 35 wt%, 100 parts of silicone gum stock (made by Nippon Unicar) having a viscosity of 300,000 CS at 23 °C and a methyl vinylsilicone content of 1.0 %, 0.05 parts of 1,13-tetradecadiene, 0.05 parts of dicumyl peroxide, and 0.05 parts of IRGANOX 1010 (an antioxidant made by Ciba Gaigy) were kneaded by a Brabender Plastograph at 120 °C for 10 minutes and at 180 °C for 15 minutes. This kneaded result and 50 parts of ferrous iron oxide were kneaded for 5 minutes. Then the kneaded result was pressed into a 100 $\mu$-thickness sheet. This sheet was thermally laminated at 150 °C to the polyethylene layer of a two-layer film of ethylene-vinyl alcohol copolymer/polyethylene to form a three-layer film.

Thus prepared three-layer film was formed into bags with the ferrous iron oxide contained in the inside layer.

Thus prepared bags were filled with pieces of rice cakes and heat-sealed. Then the bags were left at the room temperature for 3 months. When the bags were opened, no change, such as molding, etc., was observed on the cakes.

Control 2

The two-layer film of ehtylene-vinyl alcohol copolymer used in Example 2 was formed into bags. The bags were filled with pieces of rice cakes and heat-sealed. Then the bags were left at the room temperature for 3 months. When the bags were opened, the cakes had molded.

Example 3

The same experiment was made as in Example 1, except that ferrou peroxide was used in place of ferrous iron oxide. The equivalent advantageous effect was obtained.

Example 4

The same experiment as in Example 2 was made, except that the deoxidating agent was provided by iron carbonyl coated with sodium chloride in a ratio of 10:1 instead of ferrous iron. The equivalent advantageous effect was obtained.

Example 5

The same experiment as in Example 1 was made, except that iron carbide coated with potassium chloride in a ratio of 10:0.5 instead of ferrous iron. The equivalent advantageous effect was obtained.

Example 6

The same experiment as in Example 1 was made except that iron carbide coated with magnesium chloride in a ratio of 10:1 instead of ferrous ron. The equvalent advantageous effect was obtained.

**Claims**

1. A deoxidating resin composition comprising:
100 weight parts of a reaction product obtained by heat-reacting a composition comprising
100 weight parts of ethylene polymer,
1 - 400 weight parts of organopolysiloxane having a viscosity higher than 1,000 CS at 23 °C and expressed by Formula (A)

$$R^1_a R^2_b SiO_{\frac{4-a-b}{2}} \qquad (A)$$

(where $R^1$ is an unsaturated aliphatic group, $R^2$ is an unsubstituted or a substituted monovalent hydrocarbon group containing no unsaturated aliphatic group, $0<a<1$, $0.5<b<3$, and $1<a+b<3$),
0.01 - 30 weight parts of a hydrocarbon compound expressed by Formula (B)
$CH_2 = CH(CH_2)_c CH = CH_2$ (B)
where c is an integer of 1 - 30), and
0.005 - 0.05 wight parts of an organic peroxide; and
0.5 - 150 weight parts of an iron deoxidating agent mixed with the reaction product.

2. A packaging container comprising an inner layer of the deoxidating resin composition according to claim 1, and an oxygen impermeable layer.

3. A deoxidating resin composition according to claim 1, wherein the iron deoxidating agent is provided by ferrous iron.